# EUROPEAN PATENT APPLICATION

(11) **EP 4 421 890 A1**
(43) Date of publication of application: **28.08.2024**
(21) Application number: 23864126.0
(22) Date of filing: 09.01.2023
(51) Int. Cl.: H01M 4/02, H01M 50/533, H01M 50/538

(54) **ELECTRODE SHEET, ELECTRODE ASSEMBLY, BATTERY CELL, BATTERY, AND ELECTRICAL DEVICE**

(71) Applicant: Contemporary Amperex Technology Co., Limited, Ningde City, Fujian 352100 (CN)
(72) Inventor: ZHANG, Zige, Ningde, Fujian 352100 (CN); XUE, Qingrui, Ningde, Fujian 352100 (CN); LI, Wei, Ningde, Fujian 352100 (CN); ZHANG, Yu, Ningde, Fujian 352100 (CN); ZHAO, Zhengyuan, Ningde, Fujian 352100 (CN); ZHANG, Jinsong, Ningde, Fujian 352100 (CN)
(74) Representative: Rowlands, Stuart Michael
(86) International application number: PCT/CN2023/071449
(87) International publication number: WO 2024/148486

(57) **Abstract**

Embodiments of this application provide an electrode plate, an electrode assembly, a battery cell, a battery, and an electric device, where the electrode plate includes an active substance region and a non-active substance region arranged along a first direction. The non-active substance region is provided with a bending structure bent along a second direction, the bending structure extends along a third direction, and in the third direction, the active substance region and the bending structure have the same size, where the second direction is a thickness direction of the active substance region, and the first direction, the second direction, and the third direction are perpendicular to each other. This not only increases the space utilization and energy density of the battery cell, but also simplifies the production process and improves the production efficiency of the battery cell.

## Description

### TECHNICAL FIELD

This application relates to the technical field of batteries, and in particular, to an electrode plate, an electrode assembly, a battery cell, a battery, and an electric device.

### BACKGROUND

In the production process of battery cells, it is common to flatten the electrode plates to obtain a smoother flattened surface for easy welding with a top cover assembly.

However, the current flattening process may introduce safety hazards to the battery cells. For example, in the flattening process, particles (for example, metal burrs) may be generated on the electrode plates. When these particles fall between the electrode plates, short circuits may be caused. In addition, the flattening may also cause tabs to be inserted, which can also lead to a short circuit and increase the probability of short circuits in the battery cells.

### SUMMARY

Embodiments of this application provide an electrode plate, an electrode assembly, a battery cell, a battery, and an electric device, so as to reduce the probability of a short circuit in the battery cell.

According to a first aspect, an electrode plate is provided, including an active substance region and a non-active substance region arranged along a first direction; where the non-active substance region is provided with a bending structure bent along a second direction, the bending structure extends along a third direction, and in the third direction, the active substance region and the bending structure have the same size, where the second direction is a thickness direction of the active substance region, and the first direction, the second direction, and the third direction are perpendicular to each other.

In this embodiment of this application, the non-active substance region of the electrode plate is provided with a bending structure that bends and extends along a specific direction. In this way, the non-active substance region of the electrode plate exhibits a regular bending structure after being wound with no need to flatten the non-active substance region of the electrode plate. This reduces the risk of a short circuit that may arise from the flattening process, thereby lowering the probability of a short circuit in the battery cell.

In some embodiments, the non-active substance region includes a partial region of a current collector and a conductive structure, where the conductive structure is connected to the partial region of the current collector, and the conductive structure includes the bending structure. In this way, through the provision of the conductive structure with the bending structure on the current collector, the impact on the current collector with the bending structure provided can be reduced, thereby reducing the degree of damage to the current collector.

In some embodiments, the partial region of the current collector includes an insulating layer and a first conductive layer and a second conductive layer provided respectively on two sides of the insulating layer, and the conductive structure includes a first conductive portion and a second conductive portion, where the first conductive portion is connected to the first conductive layer, the second conductive portion is connected to the second conductive layer, and the first conductive portion is connected to the second conductive portion. In this way, when a thermal runaway occurs in the battery cell, the insulating layer in the current collector experiences a thermal break effect, reducing the probability of a short circuit in the battery cell. Furthermore, through the interconnection between the first conductive portion, the second conductive portion, the first conductive layer, and the second conductive layer, the current generated by the active substance layer can be better collected, improving the efficiency of the battery cell.

In some embodiments, the first conductive portion exceeds the first conductive layer along the first direction by less than a size by which the second conductive portion exceeds the first conductive layer along the first direction, at least a portion of a region of the first conductive portion exceeding the first conductive layer is connected to the second conductive portion, and a region of the second conductive portion exceeding the first conductive portion in the first direction is provided with the bending structure. In this way, the thickness of the electrode plate can be reduced. Moreover, since the bending structure is provided in the region of the second conductive portion exceeding the first conductive portion, during the production process, the bending structure can be provided in the corresponding region of the second conductive portion before connecting the second conductive portion to the second conductive layer, or the bending structure can be provided in the corresponding region of the second conductive portion after connecting the second conductive portion to the second conductive layer. This not only increases the flexibility in the provision of the bending structure, but also avoids damage to other parts other than the second conductive portion during the formation of the bending structure, reducing the production loss of the electrode plate.

In some embodiments, the first conductive portion is folded to the second conductive layer size of the current collector and is connected to the second conductive layer, an end of the second conductive portion close to the active substance region in the first direction is connected to the second conductive layer and is connected to a side of the first conductive portion away from the insulating layer, and a region of the second conductive portion exceeding the first conductive portion in the first direction is provided with a bending structure. In this way, contact areas between the second conductive portion and the first conductive portion and between the second conductive portion and the second insulating layer can be further increased, thereby further increasing the conductivity of the electrode plate. Furthermore, since the bending structure is provided in the region of the second conductive portion exceeding the first conductive portion, during the production process, the bending structure can be provided in the corresponding region of the second conductive portion before connecting the second conductive portion to the first conductive portion and the second conductive layer, or the bending structure can be provided in the corresponding region of the second conductive portion after connecting the second conductive portion to the first conductive portion and the second conductive layer. This not only increases the flexibility in the provision of the bending structure, but also avoids damage to other parts other than the second conductive portion during the formation of the bending structure, reducing the production loss of the electrode plate.

In some embodiments, the partial region of the current collector includes an insulating layer and a first conductive layer and a second conductive layer provided respectively on two sides of the insulating layer, and the conductive structure includes a first conductive portion and a second conductive portion, where the first conductive portion is connected to the first conductive layer, the first conductive portion is folded to the second conductive layer side of the current collector and is connected to the second conductive layer, the second conductive portion is connected to a surface of the first conductive portion away from the insulating layer, and a region of the second conductive portion exceeding the first conductive portion in the first direction is provided with the bending structure. In this way, when thermal runaway occurs in the battery cell, the insulating layer in the current collector experiences a thermal break effect, reducing the probability of a short circuit in the battery cell. Moreover, a contact area between the second conductive portion and the first conductive portion can be increased to a certain degree, thereby enhancing the conductivity of the electrode plate. Additionally, the area of the second conductive part can be reduced to a certain degree, thereby reducing the production cost of the electrode plate. Furthermore, since the bending structure is provided in the region of the second conductive portion exceeding the first conductive portion, during the production process, the bending structure can be provided in the corresponding region of the second conductive portion before connecting the second conductive portion to the first conductive portion, or the bending structure can be provided in the corresponding region of the second conductive portion after connecting the second conductive portion to the first conductive portion. This not only increases the flexibility in the provision of the bending structure, but also avoids damage to other parts other than the second conductive portion during the formation of the bending structure, reducing the production loss of the electrode plate.

In some embodiments, the first conductive portion is connected to the first conductive layer through welding and the second conductive portion is connected to the second conductive layer through welding. In this way, the conductivity between the first conductive portion and the first conductive layer and between the second conductive portion and the second conductive layer can be improved.

In some embodiments, a size of the bending structure in the second direction is greater than 1.5 times the thickness of the active substance region. In this way, the bending structure in the non-active substance region of the wound electrode plate is easier to weld with the top cover assembly, thereby improving the production efficiency of the battery cell.

In some embodiments, after the electrode plate is wound, bending structures of adjacent layers of the electrode plate are connected to each other. This not only improves the current flow capacity between adjacent layers of the electrode plate, but can also reduce the probability of burning the separator caused by laser leakage during laser welding of the top cover assembly, thereby reducing the probability of a short circuit in the battery cell.

In some embodiments, the bending structure includes a plurality of bending portions arranged along the first direction. Arranging the plurality of bending portions along the first direction facilitates compression of the electrode plate along the first direction after winding, further reducing the impact of laser welding.

In some embodiments, the bending structure includes at least one bending portion, and different regions of the bending portion in the third direction are bent towards the same side of the second direction. This facilitates the provision of the bending structure.

According to a second aspect, an electrode assembly is provided, including a positive electrode plate, a separator, and a negative electrode plate, where the separator is provided between the positive electrode plate and the negative electrode plate, the positive electrode plate, the separator, and the negative electrode plate are wound, and the positive electrode plate is the electrode plate according to the first aspect or any possible implementation of the first aspect, and/or the negative electrode plate is the electrode plate according to the first aspect or any possible implementation of the first aspect.

In this embodiment of this application, since the electrode assembly has a bending structure, the electrode assembly can be welded along the first direction with no need to flatten the non-active substance region of the electrode plate. This reduces the potential risk of a short circuit that may arise from the flattening process, reducing the probability of a short circuit in the battery cell.

In some embodiments, the non-active substance region of the positive electrode plate and the non-active substance region of the negative electrode plate are provided opposite each other in the first direction. In this way, the positive electrode plate and the negative electrode plate can be simultaneously treated in the same way, facilitating the production of the electrode assembly.

In some embodiments, bending structures of adjacent layers of the positive electrode plate are connected to each other to cover the separator and the negative electrode plate, and bending structures of adj acent layers of the negative electrode plate cover the separator and the positive electrode plate. Covering the adjacent separators and electrode plates through the bending structure can reduce the probability of burning the separator caused by laser leakage during laser welding of the top cover assembly, thereby reducing the probability of a short circuit in the battery cell.

In some embodiments, the bending structure of the outermost layer of the positive electrode plate is covered with an insulating film. In this way, contact of the bending structure with conductive materials other than the electrode assembly can be avoided, reducing the probability of a short circuit in the battery cell.

According to a third aspect, a battery cell is provided, including an electrode assembly according to the second aspect or any possible implementation of the second aspect; a housing, where the housing has openings at two ends, and the housing is configured to accommodate the electrode assembly; and a top cover assembly, where the top cover assembly is connected to the bending structure and covers the opening.

According to a fourth aspect, a battery is provided, including a battery cell according to the third aspect or any possible implementation of the third aspect.

According to a fifth aspect, an electric device is provided, including the battery according to the fourth aspect or any possible implementation of the fourth aspect, where the battery is configured to provide electric energy.

In some embodiments, the electric device may be a vehicle, a ship, or a spacecraft.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.
FIG. 1 is a structural schematic diagram of a vehicle according to an embodiment of this application;
FIG. 2 is a schematic side view of an electrode plate according to an embodiment of this application;
FIG. 3 is a schematic side view of another electrode plate according to an embodiment of this application;
FIG. 4 is a partial schematic side view of another electrode plate according to an embodiment of this application;
FIG. 5 is another partial schematic side view of another electrode plate according to an embodiment of this application;
FIG. 6 is another partial schematic side view of another electrode plate according to an embodiment of this application;
FIG. 7 is still another partial schematic side view of another electrode plate according to an embodiment of this application;
FIG. 8 is a partial schematic side view of a wound electrode plate according to an embodiment of this application;
FIG. 9 is a partial schematic side view of another wound electrode plate according to an embodiment of this application;
FIG. 10 is a schematic side view of a compressed electrode plate according to an embodiment of this application;
FIG. 11 is a schematic side view of another compressed electrode plate according to an embodiment of this application;
FIG. 12 is a schematic side view of still another electrode plate according to an embodiment of this application;
FIG. 13 is a schematic side view of an electrode assembly according to an embodiment of this application;
FIG. 14 is a schematic diagram of a battery cell according to an embodiment of this application;
FIG. 15 is a schematic top view of a battery cell according to an embodiment of this application; and
FIG. 16 is a schematic top view of a welded battery cell according to an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The electrode assembly includes an electrode plate. In order for the electrode assembly to be better welded to the top cover assembly (that is, welded to a current collector plate in the top cover assembly), it is usually necessary to flatten the entire tab of the non-active substance region of the electrode plate such that the non-active substance region of the electrode plate deforms, and the deformed electrode plate is then welded to the current collector plate in the top cover assembly. In this way, the electrode assembly can be connected to the top cover plate via an adapter strip connected to the current collector plate, allowing the output of electric energy to an electric device.

However, the current flattening process may introduce safety hazards to the battery cells. For example, the flattening process may cause particles (for example, metal burrs) to be generated on the electrode plates. When the particles fall between the electrode plates, a short-circuit problem may be caused. Furthermore, the flattening may cause the entire tab to insert into the interior of the electrode assembly, that is, the entire tab of the positive electrode plate and/or the negative electrode plate is deformed excessively and penetrates the separator. This may also result in a short circuit and affect the safety performance of the battery cell.

To solve the above problem, an embodiment of this application provides an electrode plate, where the electrode plate includes an active substance region and a non-active substance region arranged along a first direction. The non-active substance region is provided with a bending structure bent along a second direction, the bending structure extends along a third direction, and in the third direction, the active substance region and the bending structure have the same size, where the second direction is a thickness direction of the active substance region, and the first direction, the second direction, and the third direction are perpendicular to each other. Therefore, the non-active substance region of the electrode plate is provided with a bending structure that bends and extends along a specific direction. As a result, the non-active substance region of the electrode plate exhibits a regular bending structure after being wound with no need to flatten the non-active substance region. This reduces the risk of a short circuit that may arise from the flattening process, thereby lowering the probability of a short circuit in the battery cell.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

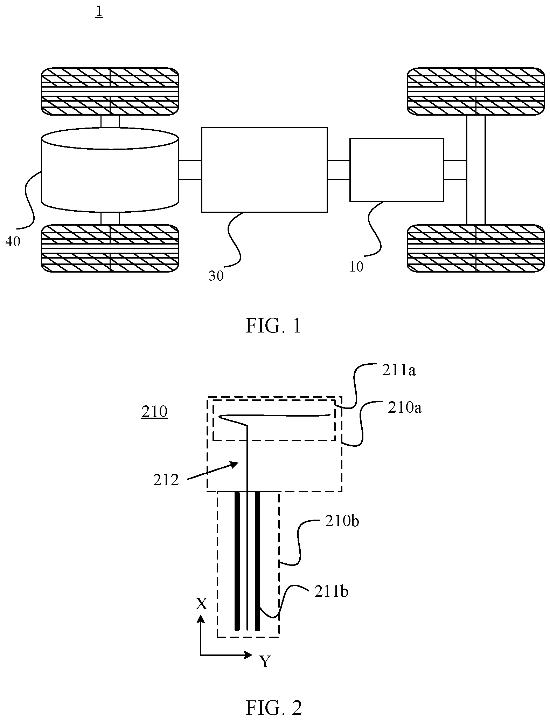

For example, FIG. 1 is a structural schematic diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

FIG. 2 is a schematic side view of an electrode plate according to an embodiment of this application. As shown in FIG. 2, the electrode plate 210 includes an active substance region 210b and a non-active substance region 210a arranged along a first direction X. The non-active substance region 210a is provided with a bending structure 211a bent along a second direction Y, the bending structure 211a extends along a third direction, and in the third direction, the active substance region 210b and the bending structure 211a have the same size, where the second direction Y is a thickness direction of the active substance region 210b, and the first direction X, the second direction Y, and the third direction are perpendicular to each other.

The active substance region 210b includes an active substance layer 211b and a metal material, where the active substance layer 211b may be selected according to a polarity of the electrode plate 210 and a type of the metal material. For example, when the polarity of the electrode plate 210 is positive and the metal material is aluminum, the active substance layer 211b may be lithium cobalt oxide, lithium iron phosphate, ternary lithium, lithium manganese, or the like; and when the polarity of the electrode plate 210 is negative and the metal material is copper, the active substance layer 211b may be carbon, silicon, or the like. The bending structure 211a may be a protrusion having a certain angle with respect to the non-active substance region 210a in the first direction X, for example, an L-shaped protrusion connected to the non-active substance region.

It should be understood that in the third direction, the size of the active substance region 210b may be a maximum distance between any two points in the third direction in the active substance region 210b; the size of the non-active substance region 210a may be a maximum distance between any two points in the third direction in the non-active substance region 210a; and the size of the bending structure 211a may be a maximum distance between any two points in the third direction on the bending structure 211a. In the third direction, the non-active substance region 210a and the bending structure 211a may have the same size, and in the third direction, the active substance region 210b and the non-active substance region 210a also have the same size.

It should be noted that in the third direction, the size of the non-active substance region 210a is the size after the metal material is coated with the active substance layer 211b and before other processing is performed on the metal material. In addition, in the third direction, the sizes of the active substance region and the bending structure are not absolutely the same, and errors may exist to a certain extent.

In this embodiment of this application, the non-active substance region 210a of the electrode plate 210 is provided with a bending structure 211a that bends and extends along a specific direction. In this way, the non-active substance region 210a of the electrode plate 210 exhibits a regular bending structure 211a after being wound with no need to flatten the non-active substance region 210a. This reduces the risk of a short circuit that may arise from the flattening process, thereby lowering the probability of a short circuit in the battery cell.

Optionally, the active substance region 210b and the non-active substance region 210a that are arranged along the first direction X may be provided integrally, or may be provided as separate parts.

In this embodiment of this application, as shown in FIG. 2, the active substance region 210b and the non-active substance region 210a are provided integrally. The active substance region 210b may be a region of the current collector 212 that is covered with the active substance layer 211b, and the non-active substance region 210a may be a region of the current collector 212 that is not covered with the active substance layer 211b. In this way, the bending structure 211a is provided directly in the region of the current collector 212 not covered with the active substance layer 211b with no need to add other parts, which not only facilitates the provision of the bending structure 211a, but also reduces the production cost of the battery cell.

For example, the current collector 212 may be made of a metal material, a semiconductor material, or a composite material.

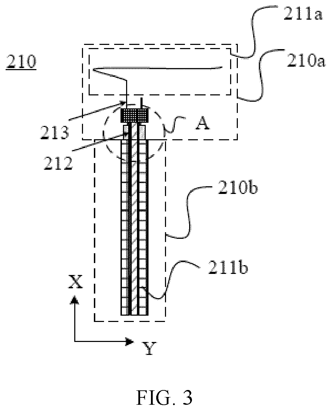

FIG. 3 is a schematic side view of another electrode plate 210 according to an embodiment of this application. The non-active substance region 210a in the electrode plate 210 as shown in FIG. 3 includes a partial region of the current collector 212 and a conductive structure 213, where the conductive structure 213 is connected to the partial region of the current collector 212, and the conductive structure 213 includes the bending structure 211a. In this way, through the provision of the conductive structure 213 with the bending structure 211a on the current collector 212, the impact on the current collector 212 with the bending structure 211a provided can be reduced, thereby reducing the degree of damage to the current collector 212.

The partial region of the current collector 212 may be a region of the current collector 212 not coated with the active substance layer 211b. The active substance layer 211b and the current collector 212 may be the same as those described in the foregoing embodiments, or may be different from those described in the foregoing embodiments. For example, the current collector 212 may be formed by sequentially stacking a plurality of parts along the second direction Y.

For example, the active substance layer 211b may be coated on an outermost surface of the current collector 212 to form an active substance region 210b. The conductive structure 213 may be connected to partial region of the current collector 212 not coated with the active substance layer, or may be connected to entire region of the current collector 212 not coated with the active substance layer. The bending structure 211a on the conductive structure 213 may be provided either in a region that overlaps with the current collector 212 or in a region that does not overlap with the current collector 212.

Optionally, the conductive structure 213 may be an integral structure or a separate structure with a plurality of parts interconnected.

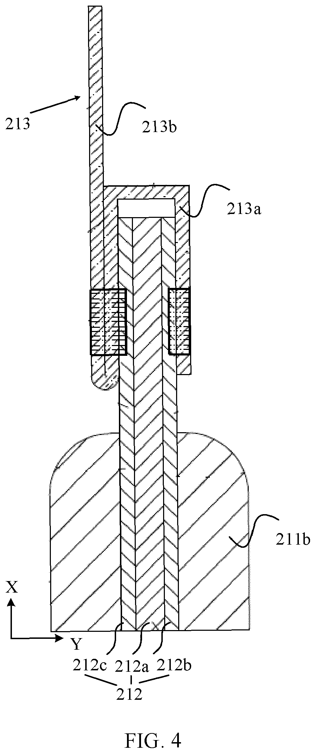

FIG. 4 is a partial schematic side view of another electrode plate 210 according to an embodiment of this application. For example, FIG. 4 is a partial schematic side view of region A in FIG. 3. As shown in FIG. 4, the current collector 212 includes an insulating layer 212a and a first conductive layer 212b and a second conductive layer 212c provided respectively on two sides of the insulating layer 212a, and the conductive structure 213 includes a first conductive portion 213a and a second conductive portion 213b, where the first conductive portion 213a is connected to the first conductive layer 212b, the second conductive portion 213b is connected to the second conductive layer 212c, and the first conductive portion 213a is connected to the second conductive portion 213b. In this way, when thermal runaway occurs in the battery cell, the insulating layer 212a in the current collector 212 experiences a thermal break effect, reducing the probability of a short circuit in the battery cell. Furthermore, through the interconnection between the first conductive portion 213a, the second conductive portion 213b, the first conductive layer 212b, and the second conductive layer 212c, the current generated by the active substance layer 211b can be better collected, improving the efficiency of the battery cell.

For example, the first conductive layer 212b, the insulating layer 212a, and the second conductive layer 212c may be stacked in sequence along the second direction Y The insulating layer 212a may be a polymer material such as polypropylene (PP) or thermoplastic polyester (polyethylene terephthalate, PET), and the first conductive layer 212b and the second conductive layer 212c may be made of a metal material, for example, copper or aluminum. The first conductive layer 212b and the second conductive layer 212c may be connected to the insulating layer 212a through vacuum coating. In addition, partial regions of the surfaces of the first conductive layer 212b and the second conductive layer 212c away from the insulating layer 212a are coated with an active substance layer 211b. The first conductive portion 213a is connected to the partial region of the surface of the first conductive layer 212b away from the insulating layer 212a not coated with the active substance layer 211b; and the second conductive portion 213b is connected to the partial region of the surface of the second conductive layer 212c away from the insulating layer 212a not coated with the active substance layer 211b. It should be noted that the first conductive portion 213a and the second conductive portion 213b may be connected through integral molding, or may be connected through welding, bonding, and the like.

It should be noted that when the first conductive portion 213a and the second conductive portion 213b are connected through the integral molding, the first conductive portion 213a and the second conductive portion 213b are equivalent.

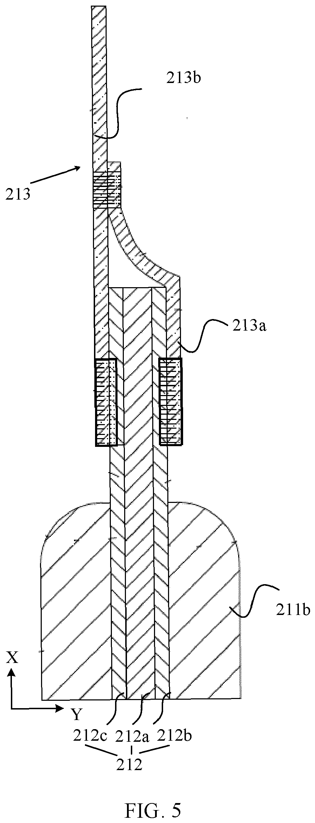

FIG. 5 is another partial schematic side view of another electrode plate 210 according to an embodiment of this application. For example, FIG. 5 is a partial schematic side view of region A in FIG. 3. As shown in FIG. 5, the first conductive portion 213a exceeds the first conductive layer 212b along the first direction X by less than a size by which the second conductive portion 213b exceeds the first conductive layer 212b along the first direction X, at least a portion of a region of the first conductive portion 213a exceeding the first conductive layer 212b is connected to the second conductive portion 213b, and a region of the second conductive portion 213b exceeding the first conductive portion 213a in the first direction X is provided with the bending structure 211a. In this way, the thickness of the electrode plate 210 can be reduced. Moreover, since the bending structure 211a is provided in the region of the second conductive portion 213b exceeding the first conductive portion 213a, during the production process, the bending structure 211a can be provided in the corresponding region of the second conductive portion 213b before connecting the second conductive portion 213b to the second conductive layer 212c; alternatively, the bending structure 211a can be provided in the corresponding region of the second conductive portion 213b after connecting the second conductive portion 213b to the second conductive layer 212c. This not only increases the flexibility in the provision of the bending structure 211a, but also avoids damage to other parts other than the second conductive portion 213b during the formation of the bending structure 211a, reducing the production loss of the electrode plate 210.

The size by which the first conductive portion 213a exceeds the first conductive layer 212b along the first direction X may be a maximum distance between any two points in the first direction X in the region of the first conductive portion 213a exceeding the first conductive layer 212b in the first direction X. The size by which the second conductive portion 213b exceeds the second conductive layer 212c along the first direction X may be a maximum distance between any two points in the first direction X in the region of the second conductive portion 213b exceeding the second conductive layer 212c along the first direction X. When the size by which the first conductive portion 213a exceeds the first conductive layer 212b along the first direction X is small, an upper surface of the first conductive portion 213a away from the first conductive layer 212b in the first direction X can be connected to the second conductive portion 213b; and when the size by which the first conductive portion 213a exceeds the first conductive layer 212b along the first direction X is large, a portion of a region of a surface of the first conductive portion 213a close to the first conductive layer 212b along the second direction Y can be connected to the second conductive portion 213b.

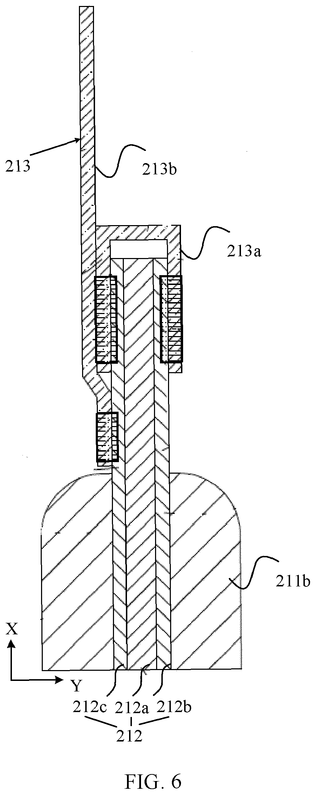

FIG. 6 is another partial schematic side view of another electrode plate 210 according to an embodiment of this application. For example, FIG. 6 is a partial schematic side view of region A in FIG. 3. As shown in FIG. 6, the first conductive portion 213a is folded to the second conductive layer 212c side of the current collector 212 and is connected to the second conductive layer 212c, an end of the second conductive portion 213b close to the active substance region 210b in the first direction X is connected to the second conductive layer 212c and is connected to a side of the first conductive portion 213a away from the insulating layer 212a, and a region of the second conductive portion 213b exceeding the first conductive portion 213a in the first direction X is provided with a bending structure 211a. In this way, contact areas between the second conductive portion 213b and the first conductive portion 213a and between the second conductive portion 213b and the second conductive layer 212c can be further increased, thereby further increasing the conductivity of the electrode plate 210. Further, since the bending structure 211a is provided in the region of the second conductive portion 213b exceeding the first conductive portion 213a, during the production process, the bending structure 211a can be provided in the corresponding region of the second conductive portion 213b before connecting the second conductive portion 213b to the first conductive portion 213a and the second conductive layer 212c, or the bending structure 211a can be provided in the corresponding region of the second conductive portion 213b after connecting the second conductive portion 213b to the first conductive portion 213a and the second conductive layer 212c. This not only increases the flexibility in the provision of the bending structure 211a, but also avoids damage to other parts other than the second conductive portion 213b during the formation of the bending structure 211a, reducing the production loss of the electrode plate 210.

For example, the first conductive portion 213a is folded to a surface of the second conductive layer 212c of the current collector 212 away from the insulating layer 212a along the second direction Y, and is connected to the partial region of the surface of the second conductive layer 212c away from the insulating layer 212a along the second direction Y An end of the second conductive portion 213b close to the region of the second conductive layer 212c coated with the active substance layer 211b along the first direction X is connected to the partial region of the second conductive layer 212c not coated with the active substance layer 211b, and is connected to a surface of the first conductive portion 213a away from the insulating layer 212a and exceeds the first conductive portion 213a.

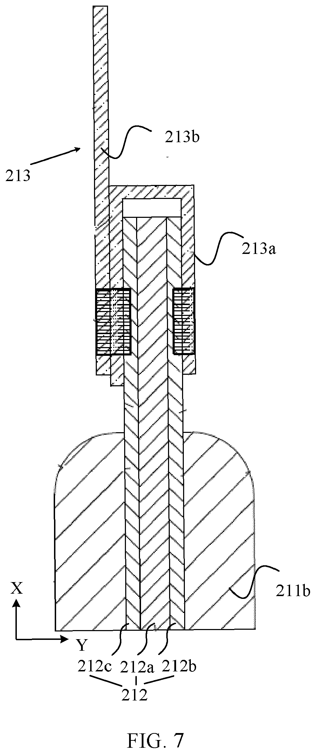

FIG. 7 is still another partial schematic side view of another electrode plate 210 according to an embodiment of this application. For example, FIG. 7 is a partial schematic side view of region A in FIG. 3. As shown in FIG. 7, the current collector 212 includes an insulating layer 212a and a first conductive layer 212b and a second conductive layer 212c provided respectively on two sides of the insulating layer 212a, and the conductive structure 213 includes a first conductive portion 213a and a second conductive portion 213b, where the first conductive portion 213a is connected to the first conductive layer 212b, the first conductive portion 213a is folded to the second conductive layer side 212c of the current collector 212 and is connected to the second conductive layer 212c, the second conductive portion 213b is connected to a surface of the first conductive portion 213a away from the insulating layer 212a, and a region of the second conductive portion 213b exceeding the first conductive portion 213a in the first direction X is provided with the bending structure 211a. In this way, when thermal runaway occurs in the battery cell, the insulating layer 212a in the current collector 212 experiences a thermal break effect, reducing the probability of a short circuit in the battery cell. Moreover, the contact area between the second conductive portion 213b and the first conductive portion 213a can be increased to a certain degree, thereby enhancing the conductivity of the electrode plate 210. Additionally, the area of the second conductive part 213b can be reduced to a certain degree, thereby reducing the production cost of the electrode plate 210. Further, since the bending structure 211a is provided in the region of the second conductive portion 213b exceeding the first conductive portion 213a, during the production process, the bending structure 211a can be provided in the corresponding region of the second conductive portion 213b before connecting the second conductive portion 213b to the first conductive portion 213a, or the bending structure 211a can be provided in the corresponding region of the second conductive portion 213b after connecting the second conductive portion 213b to the first conductive portion 213a. This not only increases the flexibility in the provision of the bending structure 211a, but also avoids damage to other parts other than the second conductive portion 213b during the formation of the bending structure 211a, reducing the production loss of the electrode plate 210.

For example, the first conductive layer 212b, the insulating film, and the second conductive layer 212c may be provided in the same manner as those in the foregoing embodiments and details are not described herein again. The first conductive portion 213a is folded to a surface of the second conductive layer 212c of the current collector 212 away from the insulating layer 212a along the second direction Y, and is connected to the partial region of the surface of the second conductive layer 212c away from the insulating layer 212a along the second direction Y The second conductive portion 213b is connected to at least partial region of a surface of the first conductive portion 213a away from the insulating layer 212a.

Optionally, the way in which the first conductive portion 213a is connected to the first conductive layer 212b and the way in which the second conductive portion 213b is connected to the second conductive layer 212c are not fixed. For example, they may be connected by an adhesive (for example, thermally conductive silicone, epoxy resin adhesive, polyurethane adhesive, and the like.). Preferably, in the foregoing embodiments, the first conductive portion 213a is connected to the first conductive layer 212b through welding and the second conductive portion 213b is connected to the second conductive layer 212c through welding. In this way, the conductivity between the first conductive portion 213a and the first conductive layer 212b and between the second conductive portion 213b and the second conductive layer 212c can be improved.

It should be noted that, in the foregoing embodiments, the bending structure 211a may be provided in the entire region of the second conductive portion 213b exceeding the first conductive portion 213a along the first direction X, or the bending structure 211a may be provided in partial region of the second conductive portion 213b exceeding the first conductive portion 213a along the first direction X. In addition, as shown in FIGs. 3 to 7, the bending structure 211a may include at least one bend. That is, the position of the bending structure 211a and the number of bends may be determined according to the actual situation.

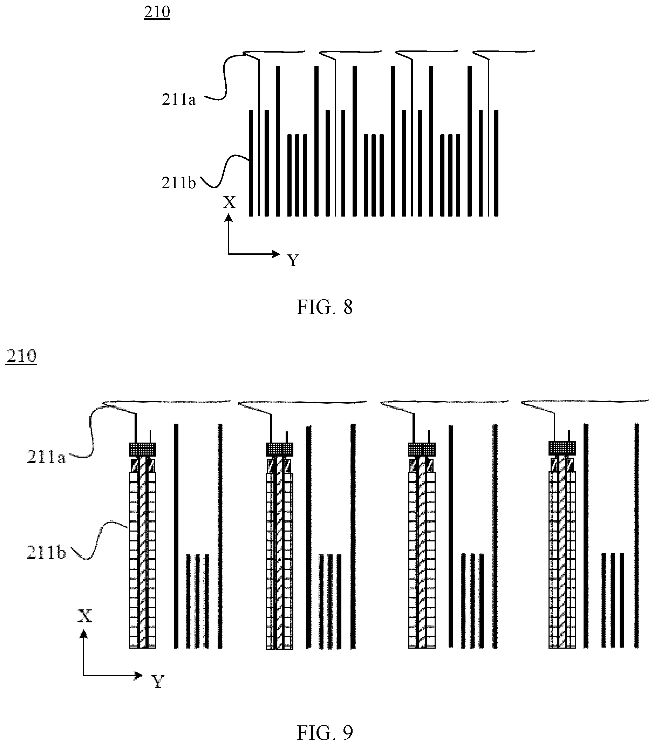

FIG. 8 is a partial schematic side view of a wound electrode plate 210 according to an embodiment of this application. FIG. 9 is a partial schematic side view of another wound electrode plate 210 according to an embodiment of this application. For example, FIG. 8 may be an electrode plate 210 produced after winding the electrode plate 210 shown in FIG. 2, and FIG. 9 may be an electrode plate 210 produced after winding another electrode plate 210 shown in FIG. 3. As shown in FIGs. 8 and 9, after the electrode plate 210 is wound, bending structures 211a of adjacent layers of the electrode plate 210 are not connected before compression along the first direction X.

It should be understood that the bending structure 211a has a predetermined length along the second direction Y The predetermined length may be determined according to the actual situation. However, to avoid interference between bending structures 211a of adjacent layers when the electrode plate 210 is wound, length of the bending structure 211a along the second direction Y may be controlled such that bending structures 211a of adjacent layers are not connected before compression along the first direction X, facilitating the winding of the electrode plate 210. Length of the bending structure 211a along the second direction Y may be a maximum distance between any two points along the second direction Y on the bending structure 211a.

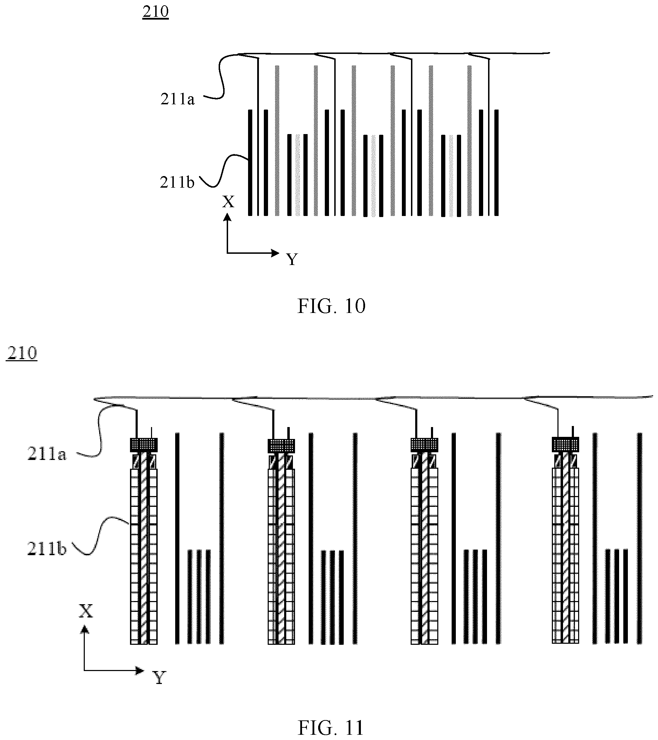

FIG. 10 is a schematic side view of a compressed electrode plate 210 according to an embodiment of this application. FIG. 11 is a schematic side view of another compressed electrode plate 210 according to an embodiment of this application. For example, FIG. 10 may be an electrode plate 210 obtained after compressing the wound electrode plate 210 shown in FIG. 8, and FIG. 11 may be an electrode plate 210 obtained after compressing another wound electrode plate 210 shown in FIG. 9. As shown in FIGs. 10 and 11, a size of the bending structure 211a in the second direction Y is greater than 1.5 times the thickness of the active substance region 210b. In this way, the bending structure 211a in the non-active substance region 210a of the wound electrode plate 210 is easier to weld with the top cover assembly 22, thereby improving the production efficiency of the battery cell.

It should be understood that the bending structure 211a not only has a predetermined length along the second direction Y, but also has a predetermined height along the first direction X. The predetermined length, the predetermined height, and the compression force of the bending structure 211a can all be used to control the deformation of the bending structure 211a. For example, a corresponding compression force can be applied to compress the bending structure 211a along the first direction X such that the size of the bending structure 211a along the second direction Y is greater than 1.5 times the thickness of the active substance region 210b. Alternatively, the size of the bending structure 211a along the second direction Y can be greater than 1.5 times the thickness of the active substance region 210b before the bending structure 211a is compressed along the first direction. The size of the bending structure 211a along the second direction Y is a maximum distance between any two points along the second direction Y on the bending structure 211a. The thickness of the active substance region 210b may be the sum of the thickness of the current collector 212 and the thickness of the active substance layer 211b. In other words, when the current collector 212 is made of a metal material, the thickness of the current collector 212 is the thickness of the metal material; and when the current collector 212 is made of a composite material, the thickness of the current collector 212 is the thickness of the composite material, for example, the sum of the thicknesses of the insulating film, the first conductive layer, and the second conductive layer.

Further, as shown in FIGs. 10 and 11, after the electrode plate 210 is wound, bending structures 211a of adjacent layers of the electrode plate 210 are connected to each other. This not only improves the current flow capacity between adjacent layers of the electrode plate 210, but can also reduce the probability of burning the separator caused by laser leakage during laser welding of the top cover assembly 22, thereby reducing the probability of a short circuit in the battery cell.

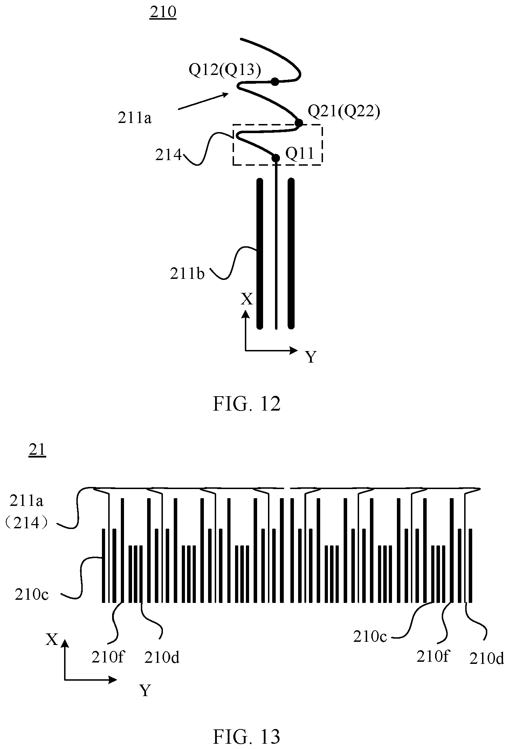

It should be noted that the foregoing embodiments are all described using the bending structure 211a being an L-shaped protrusion as an example. However, the bending structure 211a may alternatively be in other forms, for example, as shown in FIG. 12, the bending structure 211a may include a plurality of bending portions 214 connected linearly along the first direction X. This facilitates compression of the electrode plate 210 along the first direction after winding, further reducing the impact of laser welding.

For example, the bending structure 211a includes three bending portions 214 connected linearly along the first direction X. Start point Q11 of the first bending portion 214 is provided on the current collector 212 within a predetermined range from the active substance layer 211b; or start point Q11 of the first bending portion 214 is provided within a predetermined range by which the first conductive portion 213a exceeds the second conductive portion 213b along the first direction X. Moreover, the end point Q21 of the first bending portion 214 is connected to the end point Q22 of the second bending portion 214, and the start point Q12 of the second bending portion 214 is connected to the start point Q13 of the third bending portion 214.

It should be noted that FIG. 12 is only one example of the bending portion 214. The bending portion 214 may also be of other structures. Moreover, adjacent bending portions 214 may be connected by connecting a start point to an end point, a start point to a start point, or an end point to an end point, without limitation on the specific connection mode.

As shown in FIG. 12, the bending structure 211a includes at least one bending portion 214, and different regions of the bending portion 214 in the third direction are bent towards the same side of the second direction Y This facilitates the provision of the bending structure.

It should be understood that if the bending structure 211a includes a plurality of bending portions 214, all regions along the third direction Z of any one of the bending portions 214 are bent towards the same side of the second direction Y

It should be noted that the bending structure 211a shown in FIGs. 8 to 12 is merely an example and should not be considered as a limitation of this application. The number of bending portions 214 needs to be determined according to the actual situation.

FIG. 13 is a schematic side view of an electrode assembly 21 according to an embodiment of this application. The electrode assembly 21 as shown in FIG. 13 includes a positive electrode plate 210c, a separator 210f, and a negative electrode plate 210d, where the separator 210f is provided between the positive electrode plate 210c and the negative electrode plate 210d, the positive electrode plate 210c, the separator 210f, and the negative electrode plate 210d are wound, the positive electrode plate 210c is the electrode plate 21 as described in any one of the foregoing embodiments, and/or the negative electrode plate 210d is the electrode plate 210 as described in any one of the foregoing embodiments.

The description of the positive electrode plate 210c and the negative electrode plate 210d is the same as described above, and details are not described again herein. The separator 210f may be made of polypropylene or polyethylene (PE).

In embodiments of this application, since the electrode assembly 21 has a bending structure 211a, the electrode assembly 21 can be welded along the first direction X with no need to flatten the non-active substance region 210a. This reduces the potential risk of a short circuit that may arise from the flattening process, reducing the probability of a short circuit in the battery cell.

Optionally, the non-active substance region 210a of the positive electrode plate 210c and the non-active substance region 210a of the negative electrode plate 210d are provided opposite each other along the first direction X. In this way, the positive electrode plate 210c and the negative electrode plate 210d can be simultaneously treated in the same way, facilitating the production of the electrode assembly 21.

It should be understood that the bending structure 211a of the positive electrode plate 210c and the bending structure 211a of the negative electrode plate 210d are also provided opposite each other along the first direction X.

Optionally, bending structures 211a of adjacent layers of the positive electrode plate 210c are connected to each other to cover the separator 210f and the negative electrode plate 210d, and the bending structures 211a of adjacent layers of the negative electrode plate 210d cover the separator 210f and the positive electrode plate 210c. The melting point of the positive electrode plate 210c and the negative electrode plate 210d is higher than the melting point of the separator 210f. Covering the adjacent separators 210f and electrode plates 210 through the bending structure 211a reduces the probability of a burn to the separator 210f caused by laser leakage during laser welding of the top cover assembly 22, thereby reducing the probability of a short circuit in the battery cell.

In practice, the height of the separator 210f along the first direction X is usually greater than the height of the positive electrode plate 210c and the negative electrode plate 210d along the first direction X. Then, the bending structure 211a can be provided in a region of the non-active substance region 210a exceeding the separator 210f along the first direction X.

Optionally, the bending structure 211a of the outermost layer of the positive electrode plate 210c is covered with an insulating film. In this way, contact of the bending structure 211a with conductive materials other than the electrode assembly 21 can be avoided, reducing the probability of a short circuit in the battery cell.

It should be noted that the foregoing embodiments are described only by using the positive electrode plate 210c as an example. The negative electrode plate 210d is provided in the same manner as the positive electrode plate 210c, and details are not described again herein.

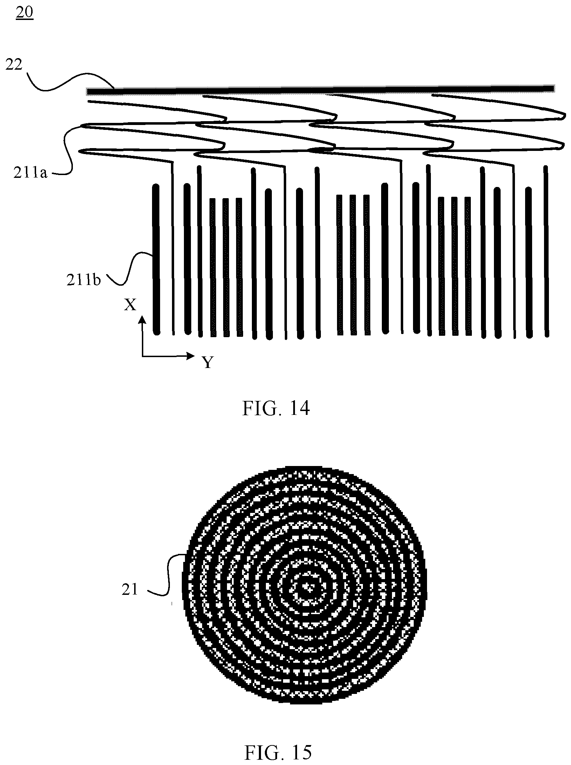

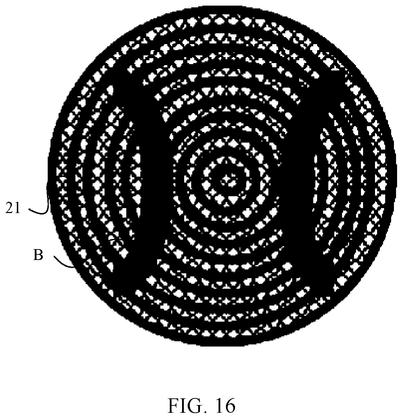

FIG. 14 is a schematic diagram of a battery cell according to an embodiment of this application. FIG. 15 is a schematic top view of a battery cell according to an embodiment of this application. FIG. 16 is a schematic top view of a welded battery cell according to an embodiment of this application. Refer to the battery cell 20 shown in FIGs. 14 to 16. The battery cell 20 includes an electrode assembly 21 as described in the foregoing embodiments; a housing, where the housing has openings at both ends, and the housing is configured to accommodate the electrode assembly 21; and a top cover assembly 22, where the top cover assembly 22 is connected to the bending structure 211a and covers the openings.

The top cover assembly 22 may be connected to the bending structure 211a by laser welding, forming a welding zone B. Specifically, a current collector plate 221 of the top cover assembly 22 is connected to the bending structure 211a by laser welding, forming the welding zone B.

In the actual production process, a production process of the foregoing battery cell 20 may include the following steps in sequence: coating, cold pressing, roll welding, gluing, slitting, winding, flattening, and laser welding of the top cover assembly 22.

Embodiments of this application further provide a battery 10, where the battery 10 may include the electrode assembly 21 described in any of the foregoing embodiments.

It should be understood that relevant portions of embodiments of this application may be cross-referenced to each other. For brevity, details are not repeated herein.

An embodiment of this application further provides an electric device, where the electric device may include the battery 10 according to the foregoing embodiments. Optionally, the electric device may be a vehicle 1, a ship or a spacecraft, and the like. However, the embodiments of this application are not limited thereto.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode plate, **characterized by** comprising:
an active substance region (210b) and a non-active substance region (210a) arranged along a first direction (X); wherein
the non-active substance region (210a) is provided with a bending structure (211a) bent along a second direction (Y), the bending structure (211a) extends along a third direction, and the active substance region (210b) and the bending structure (211a) have the same size in the third direction, wherein the second direction (Y) is a thickness direction of the active substance region (210b), and the first direction (X), the second direction (Y), and the third direction are perpendicular to each other.

2. The electrode plate according to claim 1, **characterized in that** the non-active substance region (210a) comprises a partial region of a current collector (212) and a conductive structure (213), the conductive structure (213) is connected to the partial region of the current collector, and the conductive structure (213) comprises the bending structure (211a).

3. The electrode plate according to claim 2, **characterized in that** the partial region of the current collector (212) comprises an insulating layer (212a) and a first conductive layer (212b) and second conductive layer (212c) provided respectively on two sides of the insulating layer (212a), and the conductive structure (213) comprises a first conductive portion (213a) and a second conductive portion (213b), wherein the first conductive portion (213a) is connected to the first conductive layer (212b), the second conductive portion (213b) is connected to the second conductive layer (212c), and the first conductive portion (213a) is connected to the second conductive portion (213b).

4. The electrode plate according to claim 3, **characterized in that** the first conductive portion (213a) exceeds the first conductive layer (212b) along the first direction (X) by a smaller size than the second conductive portion (213b) exceeds the first conductive layer (212b) along the first direction (X), at least partial region of the first conductive portion (213a) exceeding the first conductive layer (212b) is connected to the second conductive portion (213b), and a region of the second conductive portion (213b) exceeding the first conductive portion (213a) in the first direction (X) is provided with the bending structure (211a).

5. The electrode plate according to claim 3, **characterized in that** the first conductive portion (213a) is folded to the second conductive layer (212c) side of the current collector (212) and is connected to the second conductive layer (212c), an end of the second conductive portion (213b) close to the active substance region (210b) in the first direction (X) is connected to the second conductive layer (212c) and is connected to a side of the first conductive portion (213a) away from the insulating layer (212a), and a region of the second conductive portion (213b) exceeding the first conductive portion (213a) in the first direction (X) is provided with the bending structure (211a).

6. The electrode plate according to claim 2, **characterized in that** the partial region of the current collector (212) comprises an insulating layer (212a) and a first conductive layer (212b) and a second conductive layer (212c) provided respectively on two sides of the insulating layer (212a), the conductive structure (213) comprises a first conductive portion (213a) and a second conductive portion (213b), the first conductive portion (213a) is connected to the first conductive layer (212b), the first conductive portion (213a) is folded to the second conductive layer (212c) side of the current collector (212) and is connected to the second conductive layer (212c), the second conductive portion (213b) is connected to a side of the first conductive portion (213a) away from the insulating layer (212a), and a region of the second conductive portion (213b) exceeding the first conductive portion (213a) in the first direction (X) is provided with a bending structure (211a).

7. The electrode plate according to any one of claims 3 to 6, **characterized in that** the first conductive portion (213a) is connected to the first conductive layer (212b) through welding and the second conductive portion (213b) is connected to the second conductive layer (212c) through welding.

8. The electrode plate according to any one of claims 1 to 7, **characterized in that** a size of the bending structure (211a) in the second direction (Y) is greater than 1.5 times the thickness of the active substance region (210b).

9. The electrode plate according to claim 8, **characterized in that** after the electrode plate (210) is wound, the bending structures (211a) of adjacent layers of the electrode plate (210) are connected to each other.

10. The electrode plate according to any one of claims 1 to 9, **characterized in that** the bending structure (211a) comprises a plurality of bending portions (214) connected linearly along the first direction (X).

11. The electrode plate according to any one of claims 1 to 10, **characterized in that** the bending structure (211a) comprises at least one bending portion (214), and different regions of the bending portion (214) in the third direction (Z) are bent towards the same side of the second direction (Y).

12. An electrode assembly, **characterized by** comprising a positive electrode plate (210c), a separator (210f), and a negative electrode plate (210d), wherein the separator (210f) is provided between the positive electrode plate (210c) and the negative electrode plate (210d), the positive electrode plate (210c), the separator (210f), and the negative electrode plate (210d) are wound, the positive electrode plate (210a) is the electrode plate (210) according to any one of claims 1 to 11, and/or the negative electrode plate (210d) is the electrode plate (210) according to any one of claims 1 to 11.

13. The electrode assembly according to claim 12, wherein the non-active substance region (210a) of the positive electrode plate (210c) and the non-active substance region (210a) of the negative electrode plate (210d) are provided opposite each other in the first direction (X).

14. The electrode assembly according to claim 12 or 13, **characterized in that** the bending structures (211a) of adjacent layers of the positive electrode plate (210c) are connected to each other to cover the separator (210f) and the negative electrode plate (210d), and the bending structures (211a) of adjacent layers of the negative electrode plate (210d) cover the separator (210f) and the positive electrode plate (210a).

15. The electrode assembly according to claim 14, **characterized in that** the bending structure (211a) of the outermost layer of the positive electrode plate (210c) is covered with an insulating film.

16. A battery cell, **characterized by** comprising:
the electrode assembly (21) according to any one of claims 12 to 15;
a housing, wherein the housing has openings at two ends, and the housing is configured to accommodate the electrode assembly (21); and
a top cover assembly (22), wherein the top cover assembly (22) is connected to the bending structure (211a) and covers the openings.

17. A battery, **characterized by** comprising the battery cell (20) according to claim 16.

18. An electric device, **characterized by** comprising the battery (10) according to claim 17, wherein the battery (10) is configured to supply electric energy.
